# EUROPÄISCHE PATENTSCHRIFT

(11) **EP 2 690 038 B1**
(45) Veröffentlichungstag und Bekanntmachung des Hinweises auf die Patenterteilung: **04.03.2015**
(21) Anmeldenummer: 13174650.5
(22) Anmeldetag: 02.07.2013
(51) Int. Cl.: B65G 57/00, B65G 59/00

(54) **Palettier-, Stapel- und/oder Handhabungsvorrichtung**
Palletizer, stacking and/or handling device
Dispositif de mise en palettes, d'empilement et/ou de manutention

(30) Priorität: 26.07.2012 DE 102012106825
(43) Veröffentlichungstag der Anmeldung: 29.01.2014
(73) Patentinhaber: Krones Aktiengesellschaft, 93073 Neutraubling (DE)
(72) Erfinder: Haas, Johann, 93073 Neutraubling (DE); Schneider, Horst, 93073 Neutraubling (DE)
(74) Vertreter: Benninger, Johannes

(56) Entgegenhaltungen:
- DE-B- 1 116 598
- KR-U- 20110 004 477

## Beschreibung

Die vorliegende Erfindung betrifft eine Palettier-, Stapel- und/oder Handhabungsvorrichtung mit den Merkmalen des unabhängigen Anspruchs 1.

Es gibt zahlreiche unterschiedliche Hub- und Handhabungsvorrichtungen zum Heben oder Umsetzen von Lasten. Bei vielen der zahlreichen bekannten Hub- oder Handhabungsvorrichtungen zum Heben oder Umsetzen von Lasten befindet sich die zu hebende oder umzusetzende Last außerhalb des Schwerpunktes der Vorrichtung, so dass je nach den im Betrieb auftretenden Hebelverhältnissen Gegengewichte benötigt werden, um unzulässige Lastverhältnisse oder gar ein Umkippen der Hub- oder Handhabungsvorrichtungen zu verhindern. So benötigen bspw. Auslegerkräne für einen sicheren Betrieb ein Gegengewicht, das an einem dem horizontalen Auslegerarm gegenüber liegenden rückseitigen Stützarm angelenkt ist und verhindert, dass eine unzulässig hohe Biegebelastung auf den Mast einwirkt.

Ein Auslegerkran zum Heben und Umsetzen von Lasten auf Baustellen mit einem veränderlichen Gegengewicht ist aus der KR 2011 000 44 77 U bekannt. Das an einem hinteren Kranausleger hängende Gegengewicht ist durch einen Flüssigkeitstank gebildet, der über eine Pumpe mit einem Reservoir gekoppelt ist. Durch Umpumpen der Flüssigkeit aus dem Tank oder in den Tank kann dessen Gewicht verändert und dadurch das Heben von Lasten mit großen Masseunterschieden ermöglicht werden.

Hebeeinrichtungen, die in der Verpackungstechnik eingesetzt werden, sind in aller Regel nicht mobil, sondern stehen an einem festen Ort innerhalb einer Verpackungsstraße. Solche Hebeeinrichtungen können bspw. als Palettiervorrichtungen eingesetzt werden. Bei diesen Vorrichtungen stehen schnelle Hubbewegungen innerhalb eines definierten Bewegungsbereichs im Vordergrund, die möglichst exakt und störungsfrei ablaufen sollen. Die vertikal bewegten Hubwerke werden normalerweise elektromotorisch betrieben, wobei der Antriebsmotor zum Heben einer schweren Last einen relativ großen Energieeinsatz erfordert. Zum Senken einer schweren Last können dagegen u.U. Bremseinrichtungen erforderlich sein, sofern die Bremskraft des elektrischen Antriebsmotors nicht ausreicht. Um den Energieeinsatz für das Heben und Senken der Lasten zu reduzieren, werden Gegengewichte eingesetzt, die sich gegensinnig zu den Lasten bewegen. Für eine Optimierung des Energieeinsatzes ist es wünschenswert, die jeweiligen Massen der Hubwerke mitsamt den Lasten und des Gegengewichts aufeinander abzustimmen. Da die Massen der Lasten wechseln, ist dies in der Praxis nicht möglich, weshalb die Masse des Gegengewichts normalerweise auf eine mittlere Last des Hubwerks abgestimmt wird. Als Ballastmaterial für die Gegengewichte werden häufig gegossene Bleiplatten verwendet, die ggf. mit einer Hülle überzogen sind.

US 5,993,136 beschreibt eine gattungsgemässe Vorrichtung.

Ein Ziel der vorliegenden Erfindung besteht darin, eine Palettier-, Stapel- und/oder Handhabungsvorrichtung mit einem Gegengewicht auszustatten, das die Nachteile des bisher meist verwendeten gegossenen Bleis vermeidet. Das Gegengewicht soll kostengünstiger und umweltfreundlicher herstellbar sein als Blei. Zudem soll die Masse des Gegengewichts möglichst einfach an unterschiedliche Lastverhältnisse anpassbar sein.

Dieses Ziel wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die Erfindung eine Palettiervorrichtung einer Verpackungsanlage mit einem entlang einer sich vertikal erstreckenden Hubwerksäule beweglichen Trag- und/oder Handhabungselement für Transportgüter vor, das mit einem entlang der Hubwerksäule und gegensinnig zum Trag- und/oder Handhabungselement vertikal beweglichen Gegengewicht gekoppelt ist. Gemäß der vorliegenden Erfindung umfasst das Gegengewicht einen oder mehrere Hohlbehälter, der/die mit einer losen Schüttung aus granulatartigem Ballastmaterial variabler Menge befüllt ist/sind. Der oder die Hohlbehälter sind oben offen und kann/können mit einem verschließbaren Deckel ausgestattet sein, um die lose Schüttung vor Umwelteinflüssen abzuschirmen. Der Hohlbehälter kann einteilig oder mehrteilig ausgebildet sein, wobei er wahlweise in mehrere Fächer unterteilt sein kann.

Die lose Schüttung kann aus den unterschiedlichsten geeigneten Materialien gebildet sein. So kann sie bspw. metallisches Granulat aufweisen, wobei die lose Schüttung im Wesentlichen durch Kugeln oder unregelmäßig geformtes Granulat unterschiedlichen Durchmessers oder Ausmaßes gebildet sein kann. Dabei können die Zwischenräume zwischen größeren Kugeln oder Körpern in vorteilhafter Weise durch kleinere Kugeln oder Körper weitgehend ausgefüllt sein. Besonders bevorzugt besteht das Schüttgut aus einer Mischung von unterschiedlich großen Kugeln oder Körpern. Als Schüttmaterial kommt bspw. Stahlguss o.ä. in Frage. Auch mineralisches Material wie Steine oder Glas eignet sich als Schüttgut oder Granulat, wahlweise auch Mischungen aus mineralischem und metallischem Granulat. Von Vorteil kann es u.U. sein, wenn das metallische Granulat eisenhaltig ist und unter dem Einfluss der Luftfeuchtigkeit korrodiert, so dass die einzelnen Teilchen stärker aneinander haften. Bei allen diesen Materialien kann jedoch auf Blei oder anderes teures und/oder umweltschädliches, weil schwer zu entsorgendes Material verzichtet werden.

Eine Ausführungsvariante der erfindungsgemäßen Palettiervorrichtung kann einen Hohlkörper vorsehen, der eine oder mehrere Auslassöffnungen an der Behälterunterseite zur Entnahme der Schüttung bzw. eines Teils der Schüttung aufweist. Diese Auslassöffnung kann bspw. durch eine Klappe, einen Schieber oder ein anderes Dosierelement gebildet sein. Zudem kann es von Vorteil sein, wenn der Hohlbehälter ein von außen ablesbares Schauglas und/oder eine innenseitig an einer Wand des Behälters ablesbare Skala aufweist. Wenn diese Skalierung zudem auf die der Höhe der Schüttung entsprechende Masse des Gegengewichtes hinweist, kann diese problemlos an die typische Belastung des Hubwerks bzw. der Handhabungseinrichtung der Palettiervorrichtung angepasst werden. Eine zusätzliche Option kann darin bestehen, den Hohlbehälter mit einer Wiegeeinrichtung zur Gewichtsbestimmung auszustatten, bspw. mit einer Federwaage, die innerhalb des Zugmittels angeordnet sein kann, welches das Gegengewicht mit dem Antriebsmotor verbindet. Es ist aber auch denkbar die Wiegeeinrichtung direkt an der Unterseite des Hohlbehälters oder aber auch an dem unteren Ende der Hubwerkssäule, speziell am Boden bzw. unterem Ende innerhalb der Hubwerkssäule anzuordnen. Dies würde es ermöglichen, dass zur Gewichtsbestimmung und der eventuell notwendigen Gewichtsjustierung der Hohlbehälter auf der Wiegeeinrichtung aufsitzt, was relativ einfach mittels einer entsprechenden Steuerung des Antriebsmotors des Zugmittels und des damit in Verbindung stehenden Hohlbehälters möglich ist. So kann ohne hohen Aufwand sehr schnell das aktuelle Gegengewicht bestimmt werden und je nach Bedarf an unterschiedlichen Lastanforderungen das Gegengewicht optimal eingestellt werden.

Herkömmliche Gegengewichte oder Ballastelemente aus Bleiplatten ermöglichen keine solche Anpassung. Bei diesen Ballastelementen fehlt die gewünschte Flexibilität zum Anpassen des Gewichts an die jeweiligen Anforderungen. Demgegenüber ermöglicht die erfindungsgemäße Vorrichtung mit ihrem variablen Gegengewicht die Handhabung, das Heben und/oder Palettieren von stark unterschiedlichen Lasten, da bei jeweils unterschiedlichen anzuhebenden und abzusenkenden Lasten ein optimaler Gewichtsausgleich des Gegengewichts ermöglicht ist, so dass sich der Einsatzbereich der erfindungsgemäßen Vorrichtung erheblich erweitern lässt.

Soll die Höhe der Schüttung im Gegengewicht zu dessen Gewichtsanpassung variiert werden, so ist es von Vorteil, wenn der Hohlbehälter des Gegengewichts von außen zugänglich ist. Dies ist insbesondere der Fall, wenn die Hubwerksäule bspw. als offene Fachwerksäule ausgebildet ist, an dessen Rückseite das Gegengewicht in vertikaler Richtung beweglich ist. Wahlweise kann die Hubwerksäule jedoch auch als weitgehend geschlossene Hohlsäule ausgebildet sein, bei der das Gegengewicht innen in der Säule läuft. Bei einer solchen Ausführungsvariante sind entsprechende Maßnahmen vorzusehen, um den Hohlbehälter für die Variation der Schüttung zugänglich zu machen, bspw. durch eine von außen zugängliche Öffnung in der Hohlsäule der Hubwerksäule.

Wenn im vorliegenden Zusammenhang allgemein von einer Palettier-, Stapel- und/oder Handhabungseinrichtung gesprochen wird, so sind damit bspw. Palettiervorrichtungen gemeint, die typischerweise aus einem Hubwerk und einer daran angeordneten Handhabungseinrichtung wie z.B. einer Beladestation, Beladegreifer, Beladeplatte, Jalousiekopf oder Ähnlichem bestehen. Bei solchen Palettiervorrichtungen bestehen die Hubwerke aus mindestens einer Hubwerksäule, welche durch eine rohr- oder schachtförmige oder auch fachwerkartige Säule und daran an einer Seite angeordneten vertikalen Führungen gebildet sein kann. Innerhalb der rohr- oder schachtförmigen oder fachwerkartigen Säule bietet der Hohlraum ausreichend Platz für ein Gegengewicht, welches mittels eines Riemens und über eine angetriebene Umlenkrolle in Verbindung mit der an einer Seite des Hubwerks an dessen Führungen vertikal beweglich angebrachten Beladestation bzw. Handhabungseinrichtung steht. Das Gegengewicht ist dabei meist so ausgelegt, dass das Gewicht annähernd dem Gewicht der Beladestation bzw. der Handhabungseinrichtung inklusive dem Gewicht einer ganzen Gebindelage entspricht. Die vorliegende Erfindung ermöglicht nun durch die variable Ballastierung des Gegengewichts eine optimale Anpassung an die unterschiedlichsten Einsatzfälle und Lastfälle.

Der verwendete Begriff der Palettier-, Stapel- und/oder Handhabungseinrichtung erstreckt sich von seiner Bedeutung auch auf sog. Zwischenlageneinleger. Solche Zwischenlageneinleger werden dazu verwendet, um zwischen den einzelnen gestapelten Gebindelagen eine Zwischenlage einzulegen, der meist durch einen aus Karton bestehenden flachen Zuschnitt gebildet ist. Dies geschieht in abwechselnder Weise, so dass nach jeder Lage von Gebinden eine Zwischenlage aufgelegt werden kann. Derartige Zwischenlageneinleger ähneln hinsichtlich ihres Grundaufbaus den zuvor beschriebenen Palettiervorrichtungen. Allerdings ist anstelle einer Beladeplatte oder Beladestation eine Art Arm angebracht, der an einem Ende geeignete Greifmittel zum Ergreifen von Zwischenlagen angeordnet hat. Wenn hier von vergleichbarer oder ähnlicher Bauart die Rede ist, so bezieht sich dies auf das Grundgerüst, nicht jedoch die weiteren Konstruktionsdetails, welche natürlich auch in den Dimensionen voneinander abweichen können. Detailausführungen der Handhabungseinrichtung, des Palettierers oder des Zwischenlageneinlegers sind für die Erfindung nicht ausschlaggebend. Wesentlich für die Erfindung sind der Grundaufbau der Einrichtung selbst und das variable Gegengewicht, welche im Wesentlichen annähernd gleich sind. So weist also auch der Zwischenlageneinleger die gleichen Komponenten wie rohr- bzw. schachtförmige oder fachwerkartige Säule, Führungen, Gegengewicht, angeschweißte bzw. angeschraubte Bodenplatte, motorischer Antrieb, Riemen oder Zahnriemen, Verbindungsleitungen (pneumatisch, elektrisch) und eine Handhabungseinrichtung auf.

Schließlich sind weitere Handhabungseinrichtungen denkbar, die Teil der Vorrichtung sein können, so bspw. Wickeleinrichtungen zur Umwicklung von Palettenlagen und/oder -stapeln mit Folie oder anderem Verpackungsmaterial, Greifarme aller Art etc.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Hubwerksäule einer Palettiervorrichtung.
Fig. 2 zeigt eine weitere schematische Perspektivansicht der Hubwerksäule gemäß Fig. 1.
Fig. 3 zeigt eine schematische Draufsicht auf die Hubwerksäule gemäß Fig. 1.
Fig. 4 zeigt eine schematische Seitenansicht der Hubwerksäule gemäß Fig. 1.
Fig. 5 zeigt eine schematische Ansicht eines mit loser Schüttung befüllbaren Gegengewichts der Palettiervorrichtung.
Fig. 6 zeigt eine Variante des Gegengewichts gemäß Fig. 5.

Gleiche oder gleich wirkende Elemente der Erfindung sind im nachfolgend beschriebenen Ausführungsbeispiel mit gleichen Bezugsziffern bezeichnet. Der Übersicht halber weisen manche Figuren nur solche Bezugszeichen auf, die für die Beschreibung der jeweiligen Figur erforderlich sind. Die dargestellte Ausführungsform liefert lediglich ein Beispiel, wie die erfindungsgemäße Palettiervorrichtung ausgestaltet sein kann; eine abschließende Begrenzung ist damit nicht verbunden.

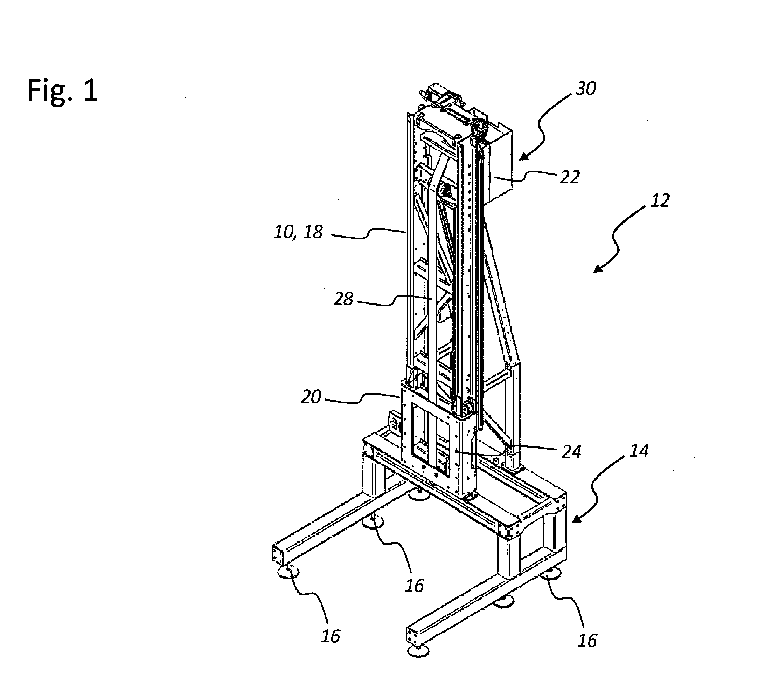

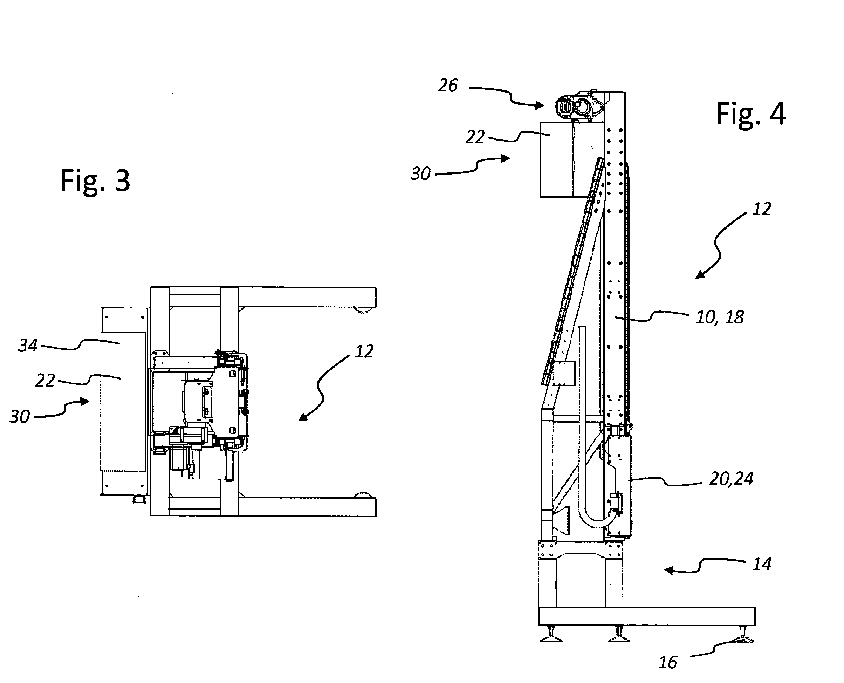

Die vier schematischen Ansichten der Figuren 1 bis 4 zeigen jeweils eine Ausführungsvariante einer Hubwerksäule 10 einer Palettiervorrichtung 12, wie sie zum Heben, Senken und/oder Umsetzen von Lasten wie bspw. Palettenlagen mit Artikeln, Stückgütern oder Getränkebehältern innerhalb einer Verpackungsanlage oder Verpackungsmaschine eingesetzt werden kann. Die dargestellte Hubwerksäule 10 erstreckt sich in vertikale Richtung und ist auf einem Stützrahmen 14 verankert, der über mehrere Stützfüße 16 am Boden aufliegt. An der Vorderseite der als Fachwerksäule 18 ausgebildeten Hubwerksäule 10 befindet sich ein heb- und senkbares Trag- und/oder Handhabungselement 20 für Transportgüter, das mit einem entlang der Hubwerksäule 10 und gegensinnig zum Trag- und/oder Handhabungselement 20 vertikal beweglichen Gegengewicht 22 gekoppelt ist. Vom Trag- und/oder Handhabungselement 20 ist in den Figuren 1 bis 4 jeweils nur ein Anschlussflansch 24 erkennbar, an dem eine Palettierauflage, ein Jalousiekopf oder ein anderes Handhabungselement befestigt werden kann, das hier jedoch nicht dargestellt ist.

Am oberen Ende der Hubwerksäule 10 ist ein Antriebseinrichtung 26 in Form eines elektrischen Antriebsmotors mit zugehöriger Winde befestigt, das für die gegensinnigen Hebe- und Senkbewegungen des Anschlussflansches 24 bzw. des Trag- und/oder Handhabungselements 20 sowie des rückseitig an der Fachwerksäule 18 in vertikaler Richtung beweglich geführten Gegengewichts 22 mittels geeigneter Zugmittel 28 sorgt.

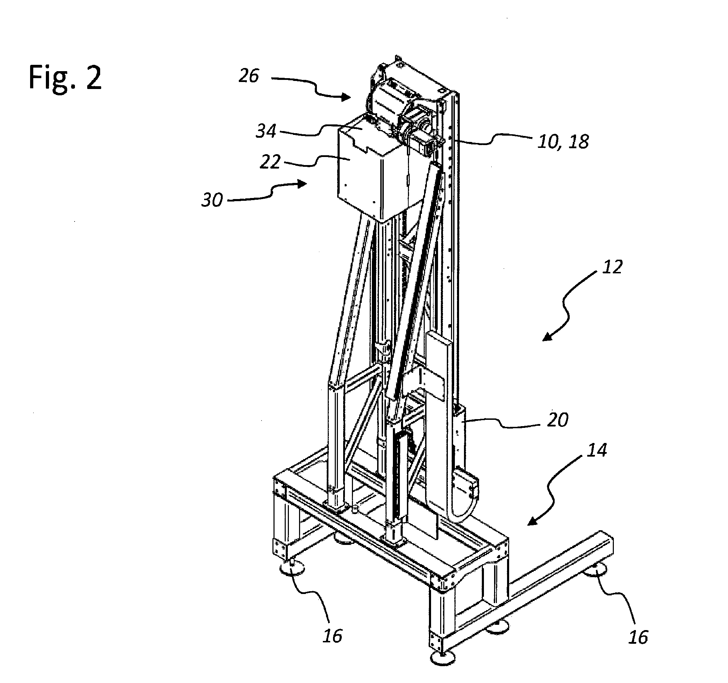

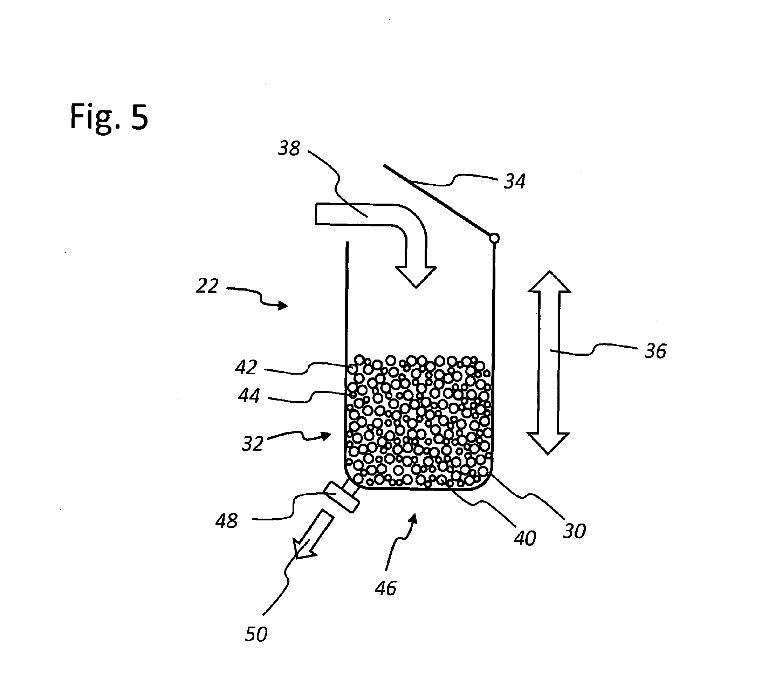

Wie insbesondere die Figuren 1 und 2 erkennen lassen, ist das Gegengewicht 22 durch einen oben offenen Hohlbehälter 30 gebildet, der mit einer losen Schüttung 32 aus granulatartigem Ballastmaterial variabler Menge befüllt ist (vgl. Fig. 5). Der Hohlbehälter 30 kann wahlweise oben offen oder wie im dargestellten Ausführungsbeispiel mit einem schwenkbaren Deckel 34 ausgestattet sein, der zum Befüllen des Hohlbehälters 30 geöffnet werden kann. Damit die Menge der Schüttung 32 im Hohlbehälter 30 des Gegengewichts 22 erfindungsgemäß variiert werden kann, ist der Hohlbehälter 30 an der Rückseite der offenen Fachwerksäule 18 von außen zugänglich.

Die schematische Darstellung der Fig. 5 verdeutlicht die Funktionsweise des variabel ballastierbaren Gegengewichts 22, das in vertikaler Hubrichtung 36 entlang der vertikalen Längserstreckungsrichtung der Hubwerksäule 10 beweglich ist. Die in den Hohlbehälter 30 durch eine Befüllung 38 einbringbare lose Schüttung 32 kann aus den unterschiedlichsten geeigneten Materialien gebildet sein. So kann sie bspw. metallisches Granulat 40 aufweisen, wobei die lose Schüttung 32 im Wesentlichen durch Kugeln oder unregelmäßig geformtes Granulat 40 unterschiedlichen Durchmessers gebildet sein kann. Dabei können die Zwischenräume zwischen größeren Kugeln 42 oder Körpern in vorteilhafter Weise durch kleinere Kugeln 44 oder Körper weitgehend ausgefüllt sein. Als Schüttmaterial kommt bspw. Stahlguss in Frage.

Der Hohlbehälter 30 weist an seiner Unterseite 46 eine Auslassöffnung 48 zur Entnahme 50 der Schüttung 32 bzw. eines Teils der Schüttung 32 auf. Diese Auslassöffnung 48 kann durch eine Klappe, einen Schieber oder ein anderes Dosierelement gebildet sein.

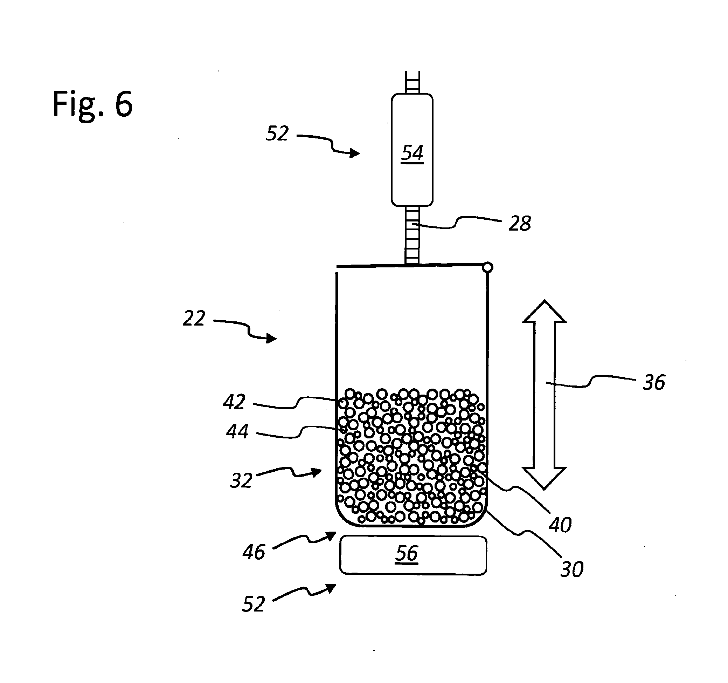

Die schematische Darstellung der Fig. 6 verdeutlicht eine Ausführungsvariante des variabel ballastierbaren Gegengewichts 22, das in vertikaler Hubrichtung 36 entlang der vertikalen Längserstreckungsrichtung der Hubwerksäule 10 beweglich ist. Um einer optimalen Befüllung in Abstimmung auf jeweils unterschiedliche Belastungsfälle nahe kommen zu können, kann dem Gegengewicht 22 eine zusätzliche Wiegeeinrichtung 52 zugeordnet sein, die unterschiedlich ausgestaltet sein kann. So kann die Wiegeeinrichtung 52 bspw. durch eine Federwaage 54 gebildet sein, die im Zugmittel 28 angeordnet ist, an der das Gegengewicht 22 aufgehängt ist.

Als alternative Wiegeeinrichtung 52 eignet sich jedoch auch eine Druckwaage 56, die unterhalb des Hohlbehälters 30 und am Stützrahmen 14 angeordnet sein kann, so dass der Hohlbehälter 30 beim Absenken des Gegengewichts 22 in seiner unterste Hublage mit seiner Unterseite 46 dort aufsetzen kann, so dass die Wägung durchgeführt werden kann. Die Wiegeeinrichtung 52 kann wahlweise mechanisch funktionieren und mittels einer Skala die Belastung des Hohlbehälters 30 anzeigen. Selbstverständlich sind auch elektrische Varianten denkbar, die ein Ausgangssignal liefern, das zur Anzeige des Gewichts und/oder zur weiteren Datenverarbeitung verwendet werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Hubwerksäule
- 12: Palettiervorrichtung
- 14: Stützrahmen
- 16: Stützfuß
- 18: Fachwerksäule
- 20: Trag- und/oder Handhabungselement
- 22: Gegengewicht
- 24: Anschlussflansch
- 26: Antriebseinrichtung
- 28: Zugmittel
- 30: Hohlbehälter
- 32: Schüttung
- 34: Deckel
- 36: vertikale Hubrichtung
- 38: Befüllung
- 40: Granulat
- 42: größere Kugeln
- 44: kleinere Kugeln
- 46: Unterseite
- 48: Auslassöffnung
- 50: Entnahme
- 52: Wiegeeinrichtung
- 54: Federwaage
- 56: Druckwaage

## Patentansprüche

1. Palettier-, Stapel- und/oder Handhabungsvorrichtung (12) einer Verpackungsanlage mit einem entlang einer sich vertikal erstreckenden Hubwerksäule (10) beweglichen Trag- und/oder Handhabungselement (20) für Transportgüter, das mit einem entlang der Hubwerksäule (10) und gegensinnig zum Trag- und/oder Handhabungselement (20) vertikal beweglichen Gegengewicht (22) gekoppelt ist, das einen oder mehrere Hohlbehälter (30) umfasst, der/die mit einer losen Schüttung (32) aus granulatartigem Ballastmaterial variabler Menge befüllt ist/sind, **dadurch gekennzeichnet, dass** die Palettiervorrichtung wenigstens einen oben offenen Hohlbehälter (30) aufweist, der das Gegengewicht (22) bildet.

2. Palettiervorrichtung nach Anspruch 1, deren wenigstens einer Hohlbehälter (30) einen verschließbaren Deckel (34) aufweist.

3. Palettiervorrichtung nach einem der Ansprüche 1 bis 2, deren wenigstens einer Hohlbehälter (30) in mehrere Fächer unterteilt ist.

4. Palettiervorrichtung nach einem der Ansprüche 1 bis 3, bei welcher der wenigstens eine Hohlbehälter (30) eine lose Schüttung (32) aus metallischem Granulat aufweist.

5. Palettiervorrichtung nach Anspruch 4, bei der die lose Schüttung (32) im Wesentlichen durch Kugeln (42, 44) oder unregelmäßig geformtes Granulat unterschiedlichen Durchmessers gebildet ist.

6. Palettiervorrichtung nach Anspruch 5, bei der Zwischenräume zwischen größeren Kugeln (42) oder Körpern durch kleinere Kugeln (44) oder Körper weitgehend ausgefüllt sind.

7. Palettiervorrichtung nach einem der Ansprüche 1 bis 6, bei welcher der wenigstens eine Hohlkörper (30) eine oder mehrere Auslassöffnungen (48) an der Behälterunterseite (46) zur Entnahme (50) der Schüttung (32) aufweist.

8. Palettiervorrichtung nach einem der Ansprüche 1 bis 7, bei welcher der Hohlbehälter (30) ein von außen ablesbares Schauglas und/oder eine innenseitig an einer Wand des Behälters (30) ablesbare Skala aufweist.

9. Palettiervorrichtung nach einem der Ansprüche 1 bis 8, bei welcher der Hohlbehälter (30) mit einer Wiegeeinrichtung (52, 54, 56) zur Gewichtsbestimmung der Schüttung (32) versehen oder gekoppelt ist.

## Claims

1. A palletising, stacking, and/or handling apparatus (12) for transport goods in a packaging line, said palletising, stacking, and/or handling apparatus (12) having a carrying and/or handling element (20), which is movable along a vertically extending pillar hoist (10), and being coupled with a counterweight (22), which is vertically movable along the pillar hoist (10) in the opposite sense to the carrying and/or handling element (20), which counterweight (22) comprises one or more hollow vessels (30), which is/are filled with a loose bulk filling (32) of a variable amount of granular ballast material, **characterised in that** the palletising apparatus has a hollow vessel (30), which is open at the top and which forms the counterweight (22).

2. The palletising apparatus as recited in claim 1, of which the at least one hollow vessel (30) has a closable lid.

3. The palletising apparatus as recited in one of the claims 1 to 2, of which the at least one hollow vessel (30) is divided into several compartments.

4. The palletising apparatus as recited in one of the claims 1 to 3 wherein the at least one hollow vessel has a loose bulk filling (32) of metal granules.

5. The palletising apparatus as recited in claim 4 wherein the loose bulk filling (32) is formed essentially from spheres (42, 44) or irregularly formed granules of varying diameters.

6. The palletising apparatus as recited in claim 5 wherein the spaces between larger spheres (42) or bodies are largely filled by smaller spheres (44) or bodies.

7. The palletising apparatus as recited in one of the claims 1 to 6 wherein the at least one hollow body (30) has one or more outlet openings (48) at the container bottom side (46) for the withdrawal (50) of the bulk filling (32).

8. The palletising apparatus as recited in one of the claims 1 to 7 wherein the hollow vessel (30) has an inspection glass that is readable from the outside and/or a readable scale on the inside of a wall of the container (30).

9. The palletising apparatus as recited in one of the claims 1 to 8 wherein the hollow vessel (30) is provided with or coupled with a weighing device (52, 54, 56) for determining the weight of the bulk filling (32).

## Revendications

1. Dispositif de palettisation, d'empilement et/ou de manutention (12) d'une installation d'emballage, comprenant un élément de support et/ou de manutention (20) pour marchandises transportées qui est déplaçable le long d'une colonne de mécanisme de levage (10) s'étendant verticalement et qui est couplé à un contrepoids (22) lequel est déplaçable verticalement le long de ladite colonne de mécanisme de levage (10) et en sens inverse par rapport à l'élément de support et/ou de manutention (20) et comprend un ou plusieurs récipient(s) creux (30) qui est/sont rempli(s) d'une charge en vrac (32) de matière de lest de type granulés de quantité variable, **caractérisé par le fait que** le dispositif de palettisation présente au moins un récipient creux (30) ouvert en haut qui forme ledit contrepoids (22).

2. Dispositif de palettisation selon la revendication 1, dont ledit au moins un récipient creux (30) présente un couvercle (34) apte à être fermé.

3. Dispositif de palettisation selon l'une quelconque des revendications 1 à 2, dont ledit au moins un récipient creux (30) est divisé en plusieurs compartiments.

4. Dispositif de palettisation selon l'une quelconque des revendications 1 à 3, dans lequel ledit au moins un récipient creux (30) présente une charge en vrac (32) en granulés métalliques.

5. Dispositif de palettisation selon la revendication 4, dans lequel la charge en vrac (32) est constituée pour l'essentiel par des billes (42, 44) ou par des granulés de diamètre différent formés de manière irrégulière.

6. Dispositif de palettisation selon la revendication 5, dans lequel des interstices entre des billes (42) ou corps plus grands sont remplis dans une large mesure par des billes (44) ou corps plus petits.

7. Dispositif de palettisation selon l'une quelconque des revendications 1 à 6, dans lequel ledit au moins un récipient creux (30) présente une ou plusieurs ouvertures de sortie (48) sur la face inférieure de récipient (46) destinées au prélèvement (50) de la matière en vrac (32).

8. Dispositif de palettisation selon l'une quelconque des revendications 1 à 7, dans lequel ledit récipient creux (30) présente un verre-regard lisible de l'extérieur et/ou une échelle qui peut être relevée côté intérieur sur une paroi du récipient (30).

9. Dispositif de palettisation selon l'une quelconque des revendications 1 à 8, dans lequel le récipient creux (30) est pourvu de ou couplé à un dispositif de pesée (52, 54, 56) destiné à déterminer le poids de la matière en vrac (32).
